# EUROPÄISCHE PATENTSCHRIFT

(11) **EP 4 631 888 B1**
(45) Veröffentlichungstag und Bekanntmachung des Hinweises auf die Patenterteilung: **17.06.2026**
(21) Anmeldenummer: 24169909.9
(22) Anmeldetag: 12.04.2024
(51) Int. Cl.: B65G 1/04, B65G 47/90, G07F 17/00, G07F 11/16, A61J 7/02

(54) **VORRATSVORRICHTUNG FÜR KLEINSTÜCKGÜTER, KIT ZUM LAGERFÄHIG-MACHEN EINER VORRATSSTATION FÜR KLEINSTÜCKGÜTER UND VERFAHREN ZUM EINLAGERN VON VORRATSSTATIONEN**
STORAGE DEVICE FOR SMALL GOODS, KIT FOR MAKING A STORAGE STATION FOR SMALL GOODS AVAILABLE FOR STORAGE, AND METHOD FOR STORING STORAGE STATIONS
DISPOSITIF DE STOCKAGE POUR PETITS OBJETS, KIT POUR PERMETTRE À UN POSTE DE STOCKAGE POUR PETITS OBJETS ET PROCÉDÉ DE STOCKAGE DE STATIONS DE STOCKAGE

(43) Veröffentlichungstag der Anmeldung: 15.10.2025
(73) Patentinhaber: Becton Dickinson Rowa Germany GmbH, 53539 Kelberg (DE)
(72) Erfinder: Schmidt-Ellinger, Hardy, 54568 Gerolstein-Bewingen (DE); Jünger, Thomas, 56767 Oberelz (DE)
(74) Vertreter: Zenz Patentanwälte Partnerschaft mbB

(56) Entgegenhaltungen:
- EP-A1- 3 156 337
- EP-A1- 3 156 338
- WO-A1-2022/181417
- US-A1- 2013 240 555

## Beschreibung

Die Erfindung betrifft eine Vorratsvorrichtung für Kleinstückgüter, ein Kit zum lagerfähig-machen einer Vorratsstation zum Einlagern in einer mit einem Backengreifer betriebenen Kommissioniervorrichtung sowie ein Verfahren zum Einlagern von Vorratsstationen.

Moderne Blisterautomaten, wie sie beispielsweise in der WO 2013/034504 A1 offenbart sind, umfassen je nach Ausbaustufe mehrere hundert Vorrats- und Abgabestationen. In diesen werden jeweils z. B. mehrere Portionen eines Arzneimittels oder Einzelportionen eines Nahrungsergänzungsmittels eines bestimmten Typs bevorratet und auf Abruf einzelne Portionen ausgegeben. Mit dem Blisterautomaten werden die in den Vorrats- und Abgabestationen gelagerten Portionen entsprechend den vom Arzt verordneten Einnahmezeitpunkten patientenindividuell zusammengestellt und verblistert. Wie genau die in den Vorrats- und Abgabestationen gelagerten Arzneimittelportionen oder Einzelportionen eines Nahrungsergänzungsmittels verblistert werden, ist in der genannten Veröffentlichung offenbart, für die vorliegende Erfindung jedoch nicht relevant.

Die bei einem Blisterautomaten verwendeten Vorrats- und Abgabestationen umfassen üblicherweise zwei Bauteilgruppen, nämlich eine Vorratsstation, in der die Arzneimittelportionen oder Einzelportionen eines Nahrungsergänzungsmittels gelagert werden, und eine Abgabestation, über die eine Ansteuerung der Vorratsstation erfolgt. Um das Nachfüllen und Reinigen der Vorratsstationen zu erleichtern, sind diese in der Regel abnehmbar auf den Abgabestationen montiert. Die Abgabestationen verbleiben in der Regel beim Nachfüllen oder Reinigen der Vorratsstationen am Blisterautomaten. Sie sind jedoch in der Regel nicht einstückig mit dem Blisterautomaten ausgebildet, sondern ebenfalls lösbar an einem Rahmen des Blisterautomaten befestigt, z. B. verschraubt, und mit einer Steuereinrichtung des Blisterautomaten gekoppelt.

Aufgrund der Art und Weise, wie die in einer Vorrats- und Abgabestation gelagerten Arzneimittelportionen oder Einzelportionen eines Nahrungsergänzungsmittels (im Folgenden als Kleinstückgüter bezeichnet, wobei dieser Begriff alle kleinen Gegenstände umfassen soll, die in einer solchen Station gelagert und mit ihr vereinzelt werden können) vereinzelt werden (einzelne Bauteile der Vorratsstation müssen an die Größe der zu vereinzelnden Kleinstückgüter angepasst sein), wird ein Blisterautomat üblicherweise mit einer Anzahl von Vorratsstationen betrieben, die die Anzahl der Abgabestationen des Blisterautomaten bei weitem übersteigt. Die Vorratsstationen, die gerade nicht in Betrieb sind, müssen unabhängig davon, ob sie bereits gefüllt sind oder nicht, gelagert werden. Dazu werden sie in der Regel vom Anwender in ein Regalsystem eingeordnet. Diese Art der Lagerung ist aufwendig und nicht platzoptimiert.

Vorrats- und Abgabestation sind aus der vorgenannten WO 2013/034504 A1 bekannt, auch werden diese detailliert beispielsweise in der EP 3 156 338 A1, der EP 3 156 337 A1 und der US 2013/240555 A1 offenbart. Hierbei offenbart die EP 3 156 338 A1 eine Vorratsstation für Kleinstückgüter mit einem Gehäuse mit einem oberen Gehäuseabschnitt, einem unteren Gehäuseabschnitt und einer Bodenplatte mit einer Abgabeöffnung, wobei der obere und der untere Gehäuseabschnitt einen Aufnahmeraum mit einem unteren, innen kreiszylinderförmigen Aufnahmeraumabschnitt und einem sich darüber erstreckenden oberen Aufnahmeraumabschnitt definieren, und mit einer in dem unteren kreiszylinderförmigen Aufnahmeraumabschnitt angeordnete Vereinzelungseinrichtung sowie einer Halteeinrichtung, wobei das Gehäuse eine äußere maximale Gehäusekontur aufweist, und mit einer unterhalb des Gehäuses angeordneten und das Gehäuse tragenden Grundstruktur mit jeweils zwei gegenüberliegenden Seitenbereichen und zwei gegenüberliegenden Stirnbereichen, wobei die Seitenbereiche und die Stirnbereiche gemeinsam eine Grundstrukturkontur definieren.

Der vorliegenden Erfindung liegt die Aufgabe zugrunde, die bekannten Vorratsstationen lagerfähig zu machen und ein Verfahren zur Lagerung von an sich nicht lagerfähigen Vorratsstationen bereitzustellen.

Aus dem Stand der Technik ist eine Vielzahl von Blisterautomaten bekannt, die mit den vorgenannten Vorrats- und Abgabestationen arbeiten. Aufgrund der Bauweise der Blisterautomaten und fehlender Standardisierungsvorgaben sind die von den verschiedenen Herstellern verwendeten Vorratsstationen uneinheitlich, und es ist nicht möglich, alle diese Vorratsstationen mit einem Aktuator desselben Typs zu handhaben; dazu sind die Formen bzw. Konturen der Vorratsstationen zu uneinheitlich.

Die Aufgabe wird daher durch eine Vorratsvorrichtung für Kleinstückgüter gelöst, wobei die Vorratsvorrichtung zur Lagerung in einer Kommissioniervorrichtung geeignet ist. Die Vorratsvorrichtung umfasst zwei Hauptbaugruppen, nämlich eine beliebige (nicht automatisiert einlagerbare) Vorratsstation und ein Adaptermittel, die lösbar miteinander verbunden sind, wobei das Adaptermittel derart angepasst und ausgestaltet ist, dass durch die Kombination der beiden Hauptbaugruppen eine automatisch einlagerbare Vorratsvorrichtung bereitgestellt wird.

Im Detail wird die Aufgabe gelöst durch eine Vorratsvorrichtung zur Lagerung in einer mit einem Backengreifer betriebenen Kommissioniervorrichtung mit einer Mehrzahl von horizontalen Lagerplätzen, aufweisend
eine Vorratsstation für Kleinstückgüter mit i) einem Gehäuse mit einem oberen Gehäuseabschnitt, einem unteren Gehäuseabschnitt und einer Bodenplatte mit einer Abgabeöffnung, wobei der obere und der untere Gehäuseabschnitt einen Aufnahmeraum mit einem unteren, innen kreiszylinderförmigen Aufnahmeraumabschnitt und einem sich darüber erstreckenden oberen Aufnahmeraumabschnitt definieren, und mit einer in dem unteren kreiszylinderförmigen Aufnahmeraumabschnitt angeordneten Vereinzelungseinrichtung sowie einer Halteeinrichtung, wobei das Gehäuse eine äußere maximale Gehäusekontur aufweist, und mit ii) einer unterhalb des Gehäuses angeordneten und das Gehäuse tragenden Grundstruktur mit jeweils zwei gegenüberliegenden Seitenbereichen und zwei gegenüberliegenden Stirnbereichen, wobei die Seitenbereiche und die Stirnbereiche gemeinsam eine Grundstrukturkontur definieren,
ferner aufweisend ein Adaptermittel mit zumindest zwei Kontaktmitteln, die lösbar an der Grundstruktur angeordnet sind und die derart ausgestaltet sind, dass jedes Kontaktmittel im befestigten Zustand benachbart zu den Seitenbereichen einen Kontaktabschnitt bereitstellt, wobei die Kontaktabschnitte derart ausgebildet und ausgerichtet sind, dass die Kontaktabschnitte von Klemmbacken des Backengreifers greifbar sind.

Erfindungsgemäß wird demnach so vorgegangen, dass eine vorhandene und bekannte Vorratsstation mit einem Adaptermittel kombiniert wird, das Kontaktabschnitte bereitstellt, die so ausgebildet sind, dass sie von den Klemmbacken eines Backengreifers erfasst werden können, wodurch die Vorratsstation als solche automatisiert einlagerbar ist. Die genaue Ausgestaltung der Adaptermittel hängt von der Ausgestaltung der Vorratsstation als solcher ab. Wesentlich ist, dass die Kontaktmittel des Adaptermittels in Abhängigkeit von der Grundstruktur der Vorratsstation angepasst bzw. ausgebildet sind, so dass greifbare Kontaktabschnitte bereitgestellt werden. Üblicherweise wird die Ausbildung der Kontaktmittel so erfolgen, dass parallele, vertikale Kontaktabschnitte bereitgestellt werden. In Abhängigkeit von der genauen Gestaltung der Klemmbacken des Backengreifers, ist dies jedoch nicht zwingend erforderlich; wesentlich ist, dass die Kontaktabschnitte das automatische Handhaben der Vorratsvorrichtung ermöglichen.

Die genaue Ausgestaltung des Adaptermittels hängt, wie bereits erwähnt, insbesondere von der Grundstruktur der Vorratsstation ab, die mit dem Adaptermittel lagerfähig gemacht werden soll. So ist es beispielsweise denkbar, dass das Adaptermittel "nur" zwei baulich voneinander getrennte Kontaktmittel aufweist, die erfindungsgemäß ausgebildet sind und beispielsweise an den Seitenbereichen der Grundstruktur lösbar befestigt sind und entsprechend die Kontaktabschnitte bereitstellen.

Um die Positionierung des Adaptermittels sowie dessen Befestigung zu unterstützen, ist es bei einer bevorzugten Ausführungsform vorgesehen, dass das Adaptermittel U-förmig ausgebildet ist und einen Basisabschnitt aufweist, an dem die Kontaktmittel befestigt sind.

Erfindungsgemäß ist das Adaptermittel lösbar an der Grundstruktur befestigt. Die lösbare Befestigung des Adaptermittels an der Grundstruktur der Vorratsstation kann auf vielfältige Art und Weise erfolgen. Bei einer Ausführungsform ist es vorgesehen, dass zumindest ein Kontaktmittel einen elastischen Klemmabschnitt aufweist und die Kontaktmittel und der zumindest eine Klemmabschnitt derart angeordnet und ausgebildet sind, dass das Adaptermittel mittels eines Kraftschlusses an der Grundstruktur lösbar befestigt ist. Bei dieser Ausführungsform ist es also vorgesehen, dass die Grundstruktur der Vorratsstation von den Kontaktmitteln des Adaptermittels geklemmt wird und so die Verbindung über Kraftschluss erfolgt. Der elastische Klemmabschnitt ist dabei so auszubilden, dass die Klemmkraft ausreicht, die Vorratsvorrichtung über die Kontaktabschnitte zu bewegen.

Alternativ kann es zur lösbaren Befestigung des Adaptermittels vorgesehen sein, dass zumindest ein Kontaktmittel bei seinem von dem Basisabschnitt abgewandten Endabschnitt einen nach innen weisenden, zumindest abschnittsweise elastischen Greifabschnitt aufweist, der derart ausgebildet ist, dass das Adaptermittel über den Basisabschnitt und den Greifabschnitt mittels einer Klemmkraft lösbar an der Grundstruktur befestigt ist.

Eine weitere Alternative sieht vor, dass jedes Kontaktmittel ein erstes Befestigungsmittel und jeder Seitenbereich ein zweites Befestigungsmittel aufweist, wobei die ersten Befestigungsmittel und die zweiten Befestigungsmittel derart aufeinander abgestimmt sind, dass die Kontaktmittel lösbar an der Grundstruktur befestigt sind. Die genaue Ausgestaltung der Befestigungsmittel ist nicht wesentlich. Denkbar ist es beispielsweise, dass in den Seitenbereichen als zweites Befestigungsmittel einfach eine Bohrung bereitgestellt wird, in welche eine Rastnase der ersten Befestigungsmittel eingreift.

Wie vorstehend erläutert, liegt der vorliegenden Erfindung die Aufgabe zugrunde, eine automatisiert einlagerbare Vorratsvorrichtung bereitzustellen, die mit einem Backengreifer eines Kommissioniervorrichtung bewegbar ist. Bei modernen Kommissioniervorrichtungen besteht die Tendenz, die Lagertiefe der Lagerplätze möglichst zu vergrößern, so dass eine Mehrzahl von beispielsweise Arzneimittelpackungen hintereinander eingelagert werden kann. Hierzu kann es vorteilhaft sein, bereits bei der Einlagerung eine Mehrzahl von (identischen) Arzneimittelpackungen (im Folgenden als Stückgut bezeichnet) auf einem Ablagebereich einer Einlagerungseinrichtung der Kommissioniervorrichtung anzuordnen, diese gemeinsam in die Kommissioniervorrichtung zu bewegen und gemeinsam mit dem Backengreifer zu greifen. Bekannte Vorratsstationen sind in der Regel so aufgebaut, dass sie einen oberen Gehäuseabschnitt aufweisen, der einen oberen Aufnahmeraumabschnitt definiert, der für die Lagerung der Kleinstückgüter vorgesehen ist. Darunter befindet sich üblicherweise ein Gehäuseabschnitt, der innen kreiszylinderförmig ausgebildet ist und in dem die Vereinzelungseinrichtung angeordnet ist. Unter diesem Gehäuseabschnitt ist wiederum eine Grundstruktur angeordnet, die das Gehäuse trägt. Dementsprechend weist eine Vorratsstation üblicherweise keine quaderförmige Gestalt, sondern eine sich vertikal verjüngende Außenkontur auf. So ist es üblich, dass die Kontur der Grundstruktur "kleiner" ist als die maximale äußere Gehäusekontur, das Gehäuse also zumindest abschnittsweise nach außen über die Grundstruktur hinausragt. Dies trifft insbesondere auf die Stirnbereiche der Vorratsstation zu. Legt man eine theoretische vertikale Anlagefläche an die äußere maximale Gehäusekontur einerseits und die Stirnbereiche der Grundstrukturkontur andererseits an, so ergibt sich bei bekannten Vorratsstationen "vorne" und/oder "hinten" eine Lücke zwischen den Anlageflächen. Werden also die Vorratsstationen so hintereinander angeordnet, dass sich die Gehäuse berühren, so entsteht zwischen den Grundstrukturen der beiden Vorratsstationen eine Lücke. Wenn theoretisch die Möglichkeit bestünde, die beiden Vorratsstationen gemeinsam zu bewegen, könnte dies dazu führen, dass sich die hintere der beiden Vorratsstationen aufrichtet und ggf. eine weitere Bewegung behindert.

Um ein entsprechendes Verhalten bei den erfindungsgemäßen Vorratsvorrichtungen zu vermeiden, ist es bei einer bevorzugten Ausführungsform vorgesehen, dass das Adaptermittel zumindest einen Konturausgleichsabschnitt aufweist, der im befestigten Zustand bei einem Stirnbereich der Grundstruktur angeordnet ist und der derart ausgebildet ist, dass eine Adaptermittelkontur im Bereich der Stirnbereiche der Grundstruktur vertikal an die maximale Gehäusekontur angepasst ist. Der zumindest eine Konturausgleichsabschnitt sorgt also dafür, dass die vorgenannte Lücke nicht vorhanden ist und auch zwei (oder mehr) hintereinander angeordnete Vorratsvorrichtungen problemlos gemeinsam bewegt werden können.

Die Aufgabe wird ferner gelöst durch ein Kit zum lagerfähig-machen einer Vorratsstation für Kleinstückgüter in einer mit einem Backengreifer betriebenen Kommissioniervorrichtung, wobei das Kit umfasst:
eine Vorratsstation für Kleinstückgüter mit einem Gehäuse mit einem oberen Gehäuseabschnitt, einem unteren Gehäuseabschnitt und einer Bodenplatte mit einer Abgabeöffnung, wobei der obere und der untere Gehäuseabschnitt einen Aufnahmeraum mit einem unteren, innen kreiszylinderförmigen Aufnahmeraumabschnitt und einem sich darüber erstreckenden oberen Aufnahmeraumabschnitt definieren, und mit einer in dem unteren kreiszylinderförmigen Aufnahmeraumabschnitt angeordneten Vereinzelungseinrichtung sowie einer Halteeinrichtung, wobei das Gehäuse eine äußere maximale Gehäusekontur aufweist, und mit einer unterhalb des Gehäuses angeordneten und das Gehäuse tragenden Grundstruktur mit jeweils zwei gegenüberliegenden Seitenbereichen und zwei gegenüberliegenden Stirnbereichen, wobei die Seitenbereiche und die Stirnbereiche gemeinsam eine Grundstrukturkontur definieren; sowie
ein Adaptermittel zum lösbaren Befestigen an der Grundstruktur der Vorratsstation, wobei das Adaptermittel zwei Kontaktmittel mit jeweils einem Kontaktabschnitt umfasst.

Die Kontaktmittel sind erfindungsgemäß derart ausgestaltet, dass jedes Kontaktmittel im befestigten Zustand benachbart zu den Seitenbereichen angeordnet ist, wobei die Kontaktabschnitte derart ausgebildet sind, dass die Kontaktabschnitte im befestigten Zustand des Adaptermittels von Klemmbacken eines Backengreifers greifbar sind.

Das Kit kann in einer Mehrzahl von bevorzugten Ausführungsformen weitergebildet sein, wie nachfolgend geschildert. Soweit keine technischen Vorteile genannt sind, entsprechen diese denen der entsprechenden Ausführungsformen der Vorratsvorrichtung.

Vorzugsweise ist das Adaptermittel U-förmig ausgebildet und weist einen Basisabschnitt auf, an dem die Kontaktmittel befestigt sind. Das zumindest eine Kontaktmittel kann vorzugsweise einen elastischen Klemmabschnitt aufweisen und die Kontaktmittel und der zumindest eine Klemmabschnitt sind derart angeordnet und ausgebildet, dass das Adaptermittel mittels eines Kraftschlusses an der Grundstruktur lösbar befestigt ist. Alternativ kann es vorgesehen sein, dass zumindest ein Kontaktmittel bei seinem von dem Basisabschnitt abgewandten Endabschnitt einen nach innen weisenden, zumindest abschnittsweise elastischen Greifabschnitt aufweist, der derart ausgebildet ist, dass das Adaptermittel über den Basisabschnitt und den Greifabschnitt mittels einer Klemmkraft lösbar an der Grundstruktur befestigt ist.

Ferner kann es alternativ vorgesehen sein, dass jedes Kontaktmittel ein erstes Befestigungsmittel und jeder Seitenbereich ein zweites Befestigungsmittel aufweist, wobei die ersten Befestigungsmittel und die zweiten Befestigungsmittel derart aufeinander abgestimmt sind, dass die Kontaktmittel lösbar an der Grundstruktur befestigt sind.

Zur Vermeidung der vorgenannten Lücke ist es vorgesehen, dass das Adaptermittel einen Konturausgleichsabschnitt aufweist, der bei einem Stirnbereich der Grundstruktur anordenbar ist und derart ausgebildet ist, dass eine Adaptermittelkontur im befestigten Zustand im Bereich der Stirnbereiche der Grundstruktur vertikal an die maximale Gehäusekontur angepasst ist.

Erfindungsgemäß wird ferner ein Verfahren zum Einlagern von Vorratsstationen in eine Kommissioniervorrichtung mit einer Mehrzahl von horizontalen Lagerplätzen, einer Einlagerungseinrichtung sowie einem Backengreifer vorgeschlagen,
wobei eine einzulagernde Vorratsstation mit einem Gehäuse mit einer äußeren maximalen Gehäusekontur und mit einer unterhalb des Gehäuses angeordneten und das Gehäuse tragenden Grundstruktur mit jeweils zwei gegenüberliegenden Seitenbereichen und zwei gegenüberliegenden Stirnbereichen, wobei die Seitenbereiche und die Stirnbereiche gemeinsam eine Grundstrukturkontur definieren, bereitgestellt wird; ein Adaptermittel mit zumindest zwei Kontaktmitteln bestimmt und bereitgestellt wird, wobei jedes Kontaktmittel einen Kontaktabschnitt umfasst, wobei das Adaptermittel derart bestimmt wird, dass die Kontaktmittel derart ausgebildet sind, dass das festgelegte Adaptermittel über die Kontaktmittel an der Grundstruktur der einzulagernden Vorratsstationen lösbar befestigt ist und die Kontaktabschnitte von Klemmbacken eines Backengreifers greifbar sind;
das Adaptermittel an der Grundstruktur der einzulagernden Vorratsstationen lösbar befestigt wird und so eine mit dem Backengreifer greifbare Vorratsvorrichtung bereitgestellt wird; die greifbare Vorratsvorrichtung in einem Ablagebereich der Einlagerungseinrichtung angeordnet wird; die im Ablagebereich angeordnete greifbare Vorratsvorrichtung mit der Einlagerungseinrichtung in einer Einlagerungsrichtung bewegt wird, und die greifbare Vorratsvorrichtung mit dem Backengreifer bei den Kontaktabschnitten gegriffen und auf einen horizontalen Lagerplatz bewegt wird.

Im Nachfolgenden werden bevorzugte Ausführungsformen der erfindungsgemäßen Vorratsvorrichtung für Kleinstückgüter, des Kits zum lagerfähig-machen einer Vorratsstation für Kleinstückgüter sowie eines Verfahrens zum Einlagern von Vorratsstationen unter Bezugnahme auf die Zeichnung beschrieben, in welcher:
Figuren 1A - 1C verschiedene Ansichten der ersten bevorzugten Ausführungsform der Vorratsvorrichtung zeigen,
Figur 2 eine Ansicht von unten der Vorratsstation als Teil der ersten bevorzugten Ausführungsform des Kits zeigt,
Figuren 3 - 5 verschiedene Ansichten der Vorratsstation als Teil der ersten bevorzugten Ausführungsform des Kits zeigen, wobei Figur 3 eine Schrägansicht, Figur 4 eine Draufsicht und Figur 5 eine Schnittansicht zeigt,
Figuren 6A und 6B verschiedene Ansichten des Adaptermittels der ersten Ausführungsform des Kits zeigen,
Figur 7 eine Ansicht von unten eines Adaptermittels der zweiten bevorzugten Ausführungsform des Kits zeigt,
Figur 8 eine Ansicht von unten der zweiten bevorzugten Ausführungsform der Vorratsvorrichtung zeigt,
Figuren 9A und 9B Ansichten von zwei hintereinander angeordneten Vorratsstationen gemäß der ersten Ausführungsform des Kits zeigen, wobei Figur 9A eine Seitenansicht und Figur 9B eine schematische Draufsicht zeigt,
Figuren 10A und 10B Ansichten von zwei hintereinander angeordneten Vorratsvorrichtungen gemäß der ersten Ausführungsform zeigen, wobei Figur 10A eine Seitenansicht und Figur 10B eine schematische Draufsicht zeigt,
Figur 11 eine schematische Draufsicht einer Kommissioniervorrichtung zeigt, in welcher das erfindungsgemäße Verfahren betrieben wird,
Figuren 12A und 12B schematische seitliche Verfahrensansichten eines Verfahrens zum Einlagern einer weiteren Ausführungsform der erfindungsgemäßen Vorratsvorrichtungen zeigen,
Figuren 13A und 13B schematische seitliche Verfahrensansichten des erfindungsgemäßen Verfahrens zeigen.

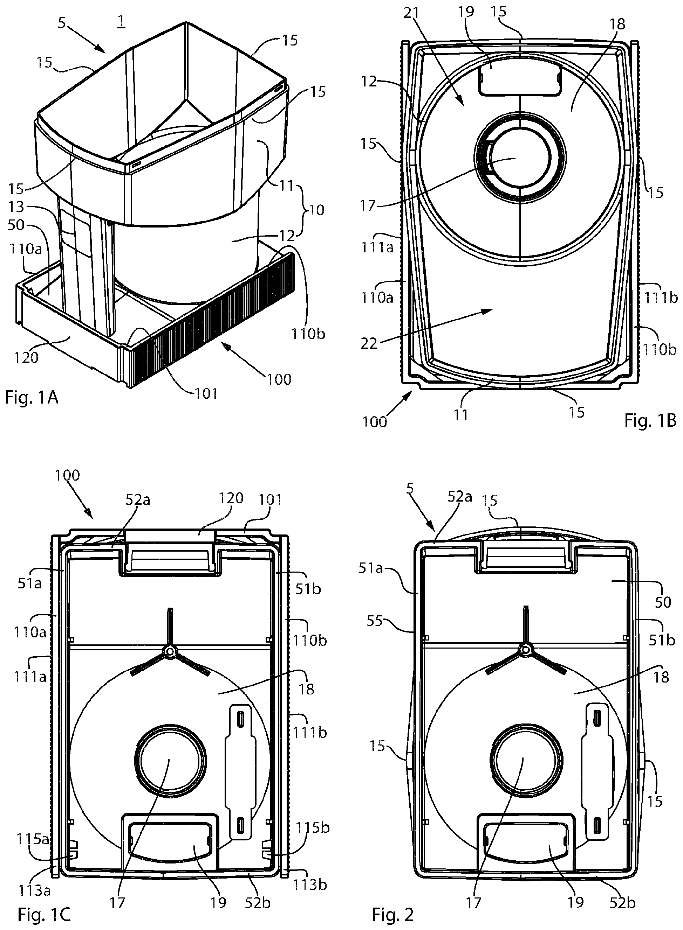

Figuren 1A - 1C zeigen verschiedene Ansichten der ersten bevorzugten Ausführungsform der Vorratsvorrichtung 1, wobei Figur 1A eine Schrägansicht, Figur 1B eine Draufsicht und Figur 1C eine Ansicht von unten zeigt. Die Vorratsvorrichtung 1 umfasst eine Vorratsstation 5 sowie ein Adaptermittel 100. Die Vorratsstation 5 umfasst ein Gehäuse 10 mit einem oberen Gehäuseabschnitt 11 und einem unteren Gehäuseabschnitt 12. Das Gehäuse 10 weist eine äußere maximale Gehäusekontur 15 auf, die bei der gezeigten Ausführungsform von dem oberen Gehäuseabschnitt 11 definiert ist. Unterhalb des Gehäuses 10 weist die Vorratsstation 5 eine Grundstruktur 50 auf, die in Figur 1A nur teilweise zu erkennen ist, da sie durch das Adaptermittel 100 zum größten Teil verdeckt ist. Von der Grundstruktur 50 erstreckt sich ein Griff 13 zu dem oberen Gehäuseabschnitt 11. Dieser Griff vereinfacht das Handling der Vorratsstation 5 bzw. der Vorratsvorrichtung 1.

Das Adaptermittel 100 ist bei der gezeigten Ausführungsform U-förmig ausgebildet und umfasst einen Basisabschnitt 101, von welchem sich zwei parallele Kontaktmittel 110a, 110b erstrecken. Der Basisabschnitt 101 umfasst bei der gezeigten ersten Ausführungsform einen Konturausgleichsabschnitt 120, dessen Funktion oben bereits angedeutet wurde und unter Bezugnahme auf nachfolgende Figuren detaillierter beschrieben wird. Wie dies in Figur 1B zu erkennen ist, umfasst das Gehäuse 10 bei dem unteren Gehäuseabschnitt 12 eine Bodenplatte 18 mit einer zentralen Öffnung 17 und einer Abgabeöffnung 19. In der zentralen Öffnung 17 ist ein Kopplungsmittel einer Vereinzelungseinrichtung angeordnet, die unter Bezugnahme auf eine nachfolgende Figur detaillierter beschrieben ist. Insbesondere bei den Figuren 1B und 1C ist zu erkennen, dass jedes Kontaktmittel 110a, 110b einen Kontaktabschnitt 111a, 111b umfasst, der als Kontaktfläche für die Backen eines Backengreifers dient.

In Figur 1C ist eine Ansicht von unten der ersten Ausführungsform der Vorratsvorrichtung gezeigt. Insbesondere ist zu erkennen, dass die Grundstruktur 50 zwei gegenüberliegende Seitenbereiche 51a, 51b und zwei gegenüberliegende Stirnbereiche 52a, 52b umfasst. An den Seitenbereichen 51a, 51b liegen die Kontaktmittel 110a, 110b an, und bei dem Stirnbereich 52a ist der Basisabschnitt 101 des Adaptermittels 100 angeordnet. In Figur 1C ist zu erkennen, dass die Seitenbereiche 51a, 51b der Grundstruktur 50 bei ihrem dem Basisabschnitt 101 abgewandten Abschnitt von einem ersten Befestigungsmittel 115a, 115b durchgedrungen sind. Die ersten Befestigungsmittel 115a, 115b erstrecken sich von den Kontaktmitteln 110a, 110b des U-förmigen Adaptermittels 100 nach innen, wie dies unter Bezugnahme auf nachfolgende Figuren näher beschrieben wird. Bei der gezeigten Ausführungsform sind die Seitenbereiche 51a, 51b sowie die Stirnbereiche 52a, 52b vollflächig ausgeführt. Dies ist jedoch nicht wesentlich, zumindest Teilbereiche können auch offen sein. Auch ist es denkbar, dass der dem Basisabschnitt gegenüberliegende Stirnbereich 52b völlig materialfrei ist.

In Figur 2 ist eine Ansicht von unten der ersten Ausführungsform der Vorratsstation 5 gezeigt, d. h. gegenüber Figur 1C ist das Adaptermittel 100 fortgelassen. In Figur 2 erkennt man, dass die Seitenbereiche 51a, 51b und die Stirnbereiche 52a, 52b eine Grundstrukturkontur 55 der Grundstruktur 50 definieren. Auch ist zu erkennen, dass sich bei der gezeigten Ausführungsform die äußere maximale Gehäusekontur 15 des Gehäuses 10 über die Grundstrukturkontur 55 der Grundstruktur 50 erstreckt, und zwar bei den Seitenbereichen 51a, 51b und dem Stirnbereich 52a.

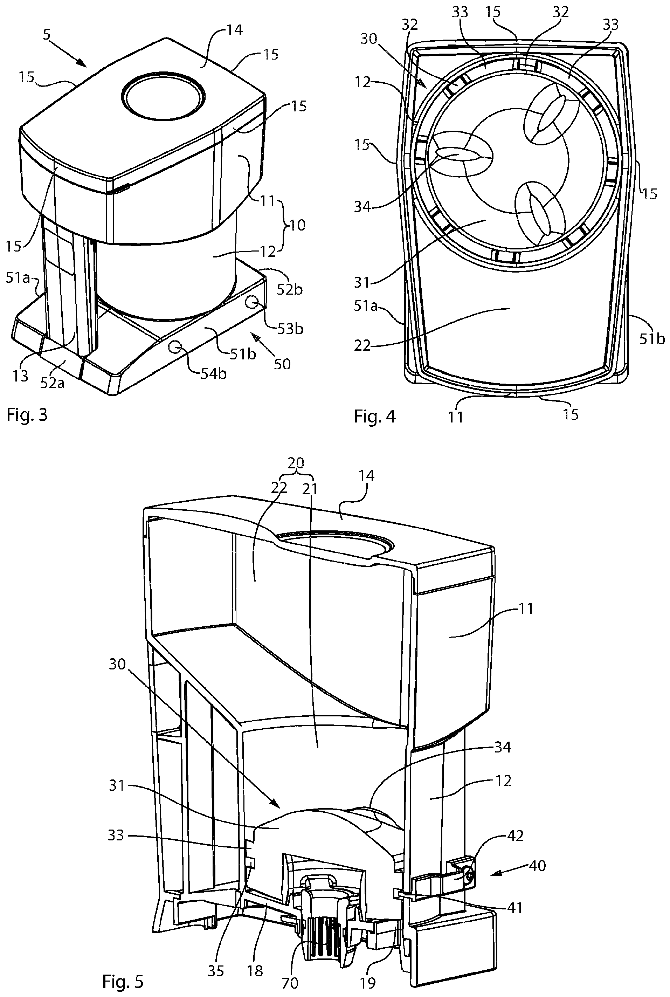

Figuren 3 - 5 zeigen verschiedene Ansichten der Vorratsstation 5 als Teil der ersten bevorzugten Ausführungsform des Kits (sowie der Vorratsvorrichtung), wobei Figur 3 eine Schrägansicht, Figur 4 eine Draufsicht und Figur 5 eine Schnittansicht zeigt. Bei der Beschreibung der Figuren 3 - 5 werden solche Bauteile der Vorratsstation 5 nicht mehr näher erläutert, die bereits unter Bezugnahme auf vorherige Figuren beschrieben wurden; die Bezugszeichen sind jedoch aus Klarheitsgründen in die Figuren aufgenommen. Bei Figur 3 ist zu erkennen, dass das Gehäuse 10 mit einem Deckel 14 versehen ist, der immer dann auf dem Gehäuse 10 angeordnet ist, wenn die Vorratsstation "in Betrieb ist". Von der Grundstruktur 50 sind insbesondere der Stirnbereich 52a und der Seitenbereich 51b zu erkennen. Der Seitenbereich 51b umfasst ein zweites Befestigungsmittel 53b sowie ein viertes Befestigungsmittel 54b, die bei der gezeigten Ausführungsform als Durchgangsbohrungen in dem Seitenbereich 51a ausgeführt sind. In diese Befestigungsmittel greifen Befestigungsmittel des Adaptermittels 100 ein, wobei die Befestigungsmittel des Adaptermittels unter Bezugnahme auf nachfolgende Figuren detaillierter beschrieben werden.

Wie in den Figuren 4 und 5 zu erkennen ist, umschließt bzw. definiert der untere Gehäuseabschnitt 12 einen unteren kreiszylinderförmigen Aufnahmeraumabschnitt 21, in welchem eine Vereinzelungseinrichtung 30 angeordnet ist, die bei der gezeigten Ausführungsform die Form eines Rotors hat. Die Vereinzelungseinrichtung 30 umfasst einen Grundkörper 31, an dem eine Mehrzahl von vertikalen Stegen 33 angeordnet sind, wobei jeweils zwischen zwei Stegen 33 ein Kanal 32 definiert ist. Die Stege 33 bzw. Kanäle 32 sind an die zu vereinzelnden Kleinstückgüter derart angepasst, dass nur eine bestimmte Anzahl von Kleinstückgütern definiert in einem Kanal angeordnet sein kann. Auf der konischen Oberfläche des Grundkörpers 31 ist eine Mehrzahl von Vorsprüngen 34 angeordnet, die im Betrieb dafür sorgen, dass die sich drehende Vereinzelungseinrichtung 30 die Kleinstückgüter bewegt, sodass gegebenenfalls vorhandene Verkeilungen aufgelöst werden und die Kleinstückgüter zu den Kanälen 32 geleitet werden. Wie es in Figur 5 zu erkennen ist, erstreckt sich die Vereinzelungseinrichtung 30 nicht über die gesamte Höhe des innen kreiszylinderförmigen Aufnahmeabschnitts 21, der von dem unteren Gehäuseabschnitt 12 definiert ist. Da die Kanäle 32 an die zu vereinzelnden Kleinstückgüter und deren Form anzupassen sind, kann sich eine Vereinzelungseinrichtung 30 bei einer anderen Ausführungsform (mit welcher andere Kleinstückgüter zu vereinzeln sind) auch durch die gesamte Höhe des unteren kreiszylinderförmigen Aufnahmeabschnitts 21 erstrecken. Oberhalb des innen kreiszylinderförmigen Aufnahmeabschnitts 21 erstreckt sich ein oberer Aufnahmeraumabschnitt 22. Der innen kreiszylinderförmige Aufnahmeabschnitt 21 und der obere Aufnahmeraumabschnitt 22 bilden einen Aufnahmeraum 20. Der nicht von der Vereinzelungseinrichtung 30 eingenommene Abschnitt des Aufnahmeraums 20, also der Bereich oberhalb der Deckfläche der Vereinzelungseinrichtung 30, dient zur chaotischen Lagerung von zu vereinzelnden Kleinstückgütern. Wie bereits oben erwähnt, kann dieser Lagerbereich in Abhängigkeit von der vertikalen Erstreckung der Vereinzelungseinrichtung 30 variieren.

Bei Figur 5 ist ein Kopplungsmittel 70 zu erkennen, welches sich durch die zentrale Öffnung in der Bodenplatte 18 erstreckt und die Vereinzelungseinrichtung 30 mit einem (nicht gezeigten) Antrieb in einer (nicht gezeigten) Abgabestation koppelt. In Figur 5 ist ferner zu erkennen, dass die Stege 33 der Vereinzelungseinrichtung 30 durch einen horizontal verlaufenden Schlitz 35 in einen oberen Abschnitt und einen unteren Abschnitt unterteilt sind. In dem Schlitz 35 ist ein Rückhalteabschnitt 41 einer Halteeinrichtung 40 geführt. Die Halteeinrichtung 40 selbst ist über einen Befestigungsabschnitt 42 an dem unteren Gehäuseabschnitt 12 festgelegt. Durch einen Schlitz in dem unteren Gehäuseabschnitt 12 ist der Rückhalteabschnitt 41 in den innen kreiszylinderförmigen Aufnahmeraumabschnitt geführt. Die Funktion der Halteeinrichtung 40 und insbesondere des Rückhalteabschnitts 41 ist es, Kleinstückgüter, die in einem Kanalabschnitt angeordnet sind, der durch die oberen Abschnitte der Stege definiert ist, von einem Kleinstückgut in dem unteren Kanalabschnitt zu separieren. Dies ist notwendig, um bei einem Kanal, der über die Abgabeöffnung 19 gedreht ist, zu verhindern, dass eine nicht definierte Anzahl an Kleinstückgütern abgegeben wird. Indem der Rückhalteabschnitt 41 in dem Schlitz 35 über der Abgabeöffnung 19 gehalten ist, wird nur das Kleinstückgut (oder die Kleinstückgüter) abgegeben, das bzw. die in dem unteren Kanalabschnitt angeordnet ist bzw. sind; regelmäßig handelt es sich dabei lediglich um ein Kleinstückgut.

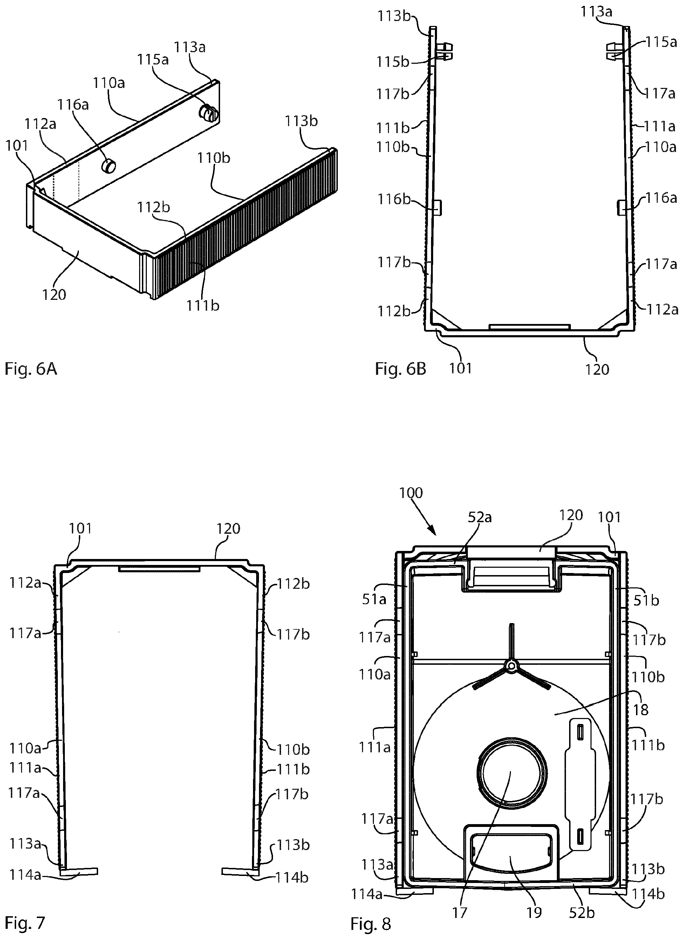

Figuren 6A und 6B zeigen verschiedene Ansichten des Adaptermittels 100 der ersten Ausführungsform des Kits, wobei Figur 6A eine Schrägansicht und Figur 6B eine Ansicht von unten zeigt. Bei der ersten Ausführungsform ist das Adaptermittel 100 U-förmig ausgebildet und umfasst einen Basisabschnitt 101, von welchem sich zwei Kontaktmittel 110a, 110b erstrecken. Bei dieser Ausführungsform sind die Kontaktmittel nicht vollständig parallel ausgebildet, sondern der Winkel zwischen Basisabschnitt und Kontaktmittel 110a, 110b ist < 90°, sodass die Kontaktmittel 110a, 110b bei ihren Endabschnitten 113a, 113b geringfügig zusammenlaufen. Bei den Endabschnitten 113a, 113b ist an jedem Kontaktmittel 110a, 110b ein erstes Befestigungsmittel 115a, 115b in Form einer Rastnase angeordnet, die in den Innenraum der U-Form des Adaptermittels 100 ragt. Im mittleren Bereich umfassen die Kontaktmittel 110a, 110b bei der gezeigten Ausführungsform ferner jeweils ein drittes Befestigungsmittel 116a, 116b. Die ersten und dritten Befestigungsmittel des Adaptermittels 100 wirken mit den zweiten und vierten Befestigungsmitteln 53a, 53b, 54a, 54b bei den Seitenbereichen 51a, 51b der Grundstruktur zusammen, um das Adaptermittel 100 lösbar an der Grundstruktur 50 der Vorratsstation 5 zu befestigen.

Um die Kontaktmittel 110a, 110b für den Befestigungsvorgang (und das Lösen) leicht auseinanderbiegen zu können, umfassen die Kontaktmittel 110a, 110b jeweils einen elastischen Klemmabschnitt 112a, 112b. Wie es in Figur 6B zu erkennen ist, umfasst jedes Kontaktmittel 110a, 110b bei dieser Ausführungsform jeweils zwei Gleitbereiche 117a, 117b, die dafür Sorge tragen, dass eine Vorratsvorrichtung bei einer Zieh- oder Schiebebewegung keine störenden Geräusche verursacht und das Ziehen und Schieben als solches darüber hinaus weniger Reibung verursacht, sodass weniger Klemmkraft auf eine Vorratsvorrichtung auszuüben ist.

Bei den nach außen gerichteten Oberflächen der Kontaktmittel 110a, 110b sind Kontaktabschnitte 111a, 111b angeordnet, bei welchen Klemmbacken eines Greifers ansetzen und über welche der Kraftschluss zwischen Vorratsvorrichtung und Greifer zum Bewegen der Vorratsvorrichtung erzeugt wird. Bei der gezeigten Ausführungsform sind die Kontaktabschnitte 111a, 111b vertikal ausgebildet, dies kann aber in Abhängigkeit von den verwendeten Klemmbacken variieren.

Figur 7 zeigt eine Ansicht von unten eines Adaptermittels 100 der zweiten bevorzugten Ausführungsform des Kits. Bei dieser Ausführungsform umfassen die Kontaktmittel 110a, 110b keine ersten und dritten Befestigungsmittel, sondern bei den Endabschnitten 113a, 113b der Kontaktmittel 110a, 110b sind elastische Greifabschnitte 114a, 114b angeordnet. Wie es in Figur 8, die eine Ansicht von unten der zweiten bevorzugten Ausführungsform der Vorratsvorrichtung zeigt, zu erkennen ist, umgreifen diese elastischen Greifabschnitte 114a, 114b Abschnitte des Stirnbereichs 52b, wodurch eine lösbare Befestigung des Adaptermittel 100 an der Vorratsstation 5 erreicht ist.

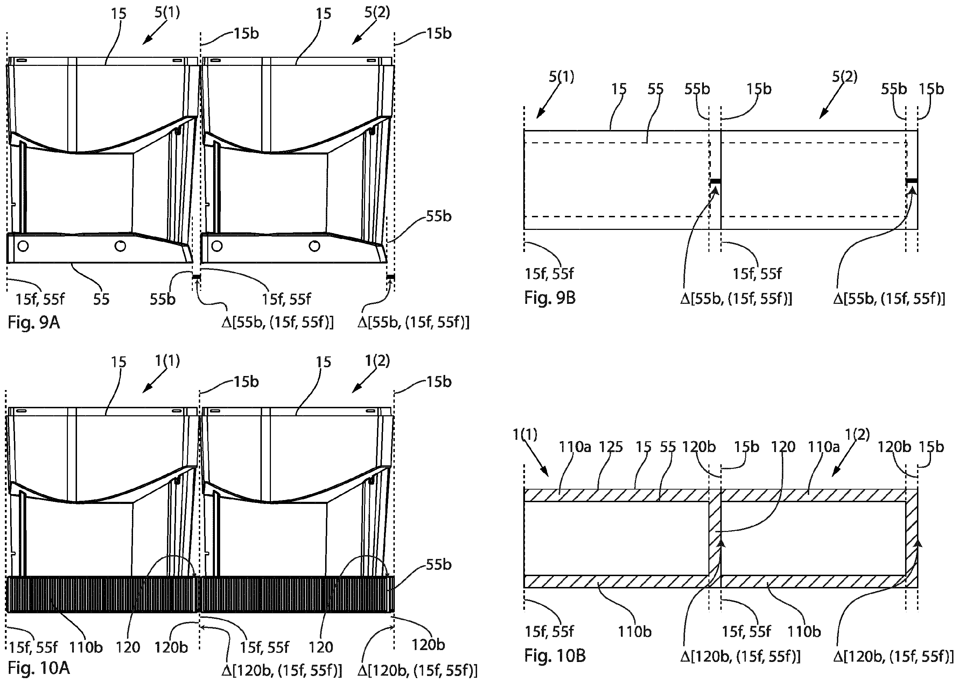

Figuren 9A und 9B zeigen Ansichten von zwei hintereinander angeordneten Vorratsstationen 5(1), 5(2) gemäß der ersten Ausführungsform des Kits, wobei Figur 9A eine Seitenansicht und Figur 9B eine schematisierte Draufsicht zeigt. Die beiden Vorratsstationen 5(1), 5(2) stehen hintereinander, **d. h.** der Frontbereich (front) der Vorratsstation 5(2) grenzt direkt an den Rückenbereich (back) der Vorratsstation 5(1). Die äußere maximale Gehäusekontur 15 sowie die Grundstrukturkontur 55 der dargestellten Vorratsstationen 5(1), 5(2) weisen identische vordere vertikale Anlageflächen 15f, 55f auf, die in der Figur 9A durch vertikale gestrichelte Linien angedeutet sind. Dies bedeutet, dass sich die Grundstruktur 50 und das Gehäuse 10 nach vorne gleich weit erstrecken, die Konturen des Gehäuses 10 und der Grundstruktur 50 sich in diesem Bereich also bei ihren vorderen Bereichen identisch sind. Bei hinteren Anlageflächen 15b, 55b verhält es sich hingegen so, dass diese nicht identisch sind, sondern zwischen diesen ein Abstand Δ[15b, 55b] vorliegt, wie es in Figur 9A deutlich zu erkennen ist. Die hinteren Anlageflächen 15b, 55b sind nicht identisch, da sich das Gehäuse 10 im Rückenbereich der Vorratsstation 5 weiter nach hinten ausdehnt, als dies die Grundstruktur 50 tut. Die maximalen Konturen des Gehäuses 10 und der Grundstruktur 50 in diesem Bereich sind also unterschiedlich. Bedingt dadurch, dass die beiden Vorratsstationen direkt hintereinander stehen und sich im Bereich der Gehäuse berühren, ergibt sich, dass nicht nur eine Lücke zwischen den hinteren Anlageflächen 15b, 55b vorhanden ist, sondern auch zwischen der hinteren Anlagefläche 55b der Grundstrukturkontur 55 der Vorratsstation 5(1) und den beiden (identischen) vorderen Anlageflächen der Vorratsstation 5(2). In den Figuren 9A und 9B ist diese Lücke mit Δ[55b, (15f, 55f)] gekennzeichnet. Während die Vorratsstationen also im Bereich der Gehäuse direkt aneinander anliegen, besteht zwischen den Grundstrukturen der Vorratsstationen eine Lücke. Für den theoretischen Fall, dass derart angeordnete Vorratsstationen mit einem Backengreifer ausgelagert bzw. bewegt werden, kann dies zu einem Verklemmen der Vorratsstation 5(1) führen. Bei nachfolgenden Figuren wird dieses Verklemmen näher erläutert. In Figur 9B ist diese Lücke schematisch veranschaulicht, wobei die Grundstrukturkontur 55 durch eine innere gestrichelte Linie angedeutet ist, und die äußere maximale Gehäusekontur 15 durch eine äußere Linie. In dem Bereich des Kontaktes der beiden Vorratsstationen ist wieder die Lücke Δ[55b, (15f, 55f)] im unteren Bereich veranschaulicht.

Figuren 10A und 10B zeigen Ansichten von zwei hintereinander angeordneten Vorratsvorrichtungen 1(1), 1(2) gemäß der ersten Ausführungsform, wobei Figur 10A eine Seitenansicht und Figur 10B eine schematisierte Draufsicht zeigt. Bei Figur 10A sind im Unterschied zu der Figur 9B nicht die Vorratsstationen (als Teil des Kits), sondern Vorratsvorrichtungen umfassend jeweils eine Vorratsstation und ein Adaptermittel dargestellt. Wie dies unter Bezugnahme auf vorherige Figuren beschrieben wurde, umfasst jedes Adaptermittel zwei Kontaktmittel 110a, 110b sowie bei der beschriebenen Ausführungsform einen Basisabschnitt 101 sowie einen Konturausgleichsabschnitt 120. Erfindungsgemäß ist dieser Konturausgleichsabschnitt 120 so gewählt, dass eine hintere Anlagefläche 120b zur Adaptermittelkontur 125 identisch mit der hinteren Anlagefläche 15b zur äußeren maximalen Gehäusekontur 15 des Gehäuses 10 ist. Bedingt durch die Identität der hinteren Anlagefläche 15b zur äußeren maximalen Gehäusekontur 15 und der hinteren Anlagefläche 120b zur Adaptermittelkontur 125 ergibt sich, dass zwischen der hinteren Anlagefläche 120b zur Adaptermittelkontur 125 der Vorratsvorrichtung 1(1) und den vorderen Anlageflächen 15f, 55f der Vorratsvorrichtung 1(2) ebenfalls keine Lücke vorhanden ist, was Auswirkungen darauf hat, wie die Vorratsvorrichtungen ausgelagert bzw. bewegt werden können, wie dies unter Bezugnahme auf eine nachfolgende Figur beschrieben ist. In Figur 10B ist entsprechend der Figur 9B eine schematisierte Ansicht gezeigt, wobei zu erkennen ist, dass der Konturausgleichsabschnitt 120 des Adaptermittels den Raum ausfüllt, der bei der Ausführungsform nach den Figuren 9A, 9B die Lücke Δ[55b, (15f, 55f)] aufwies.

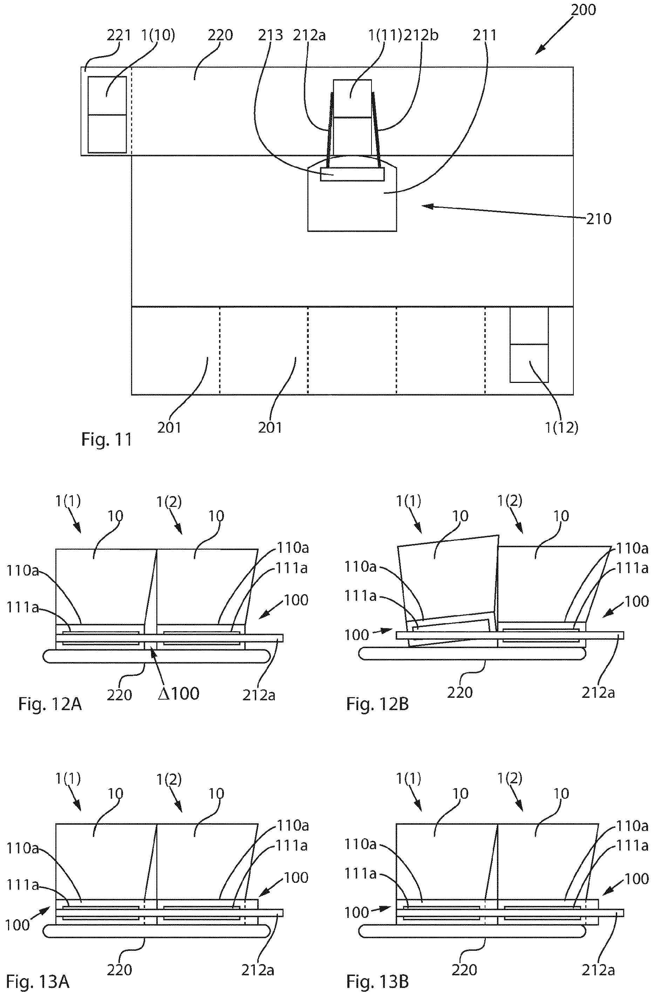

Figur 11 zeigt eine schematische Draufsicht einer Kommissioniervorrichtung 200, in welcher das erfindungsgemäße Verfahren betrieben wird und in welcher die erfindungsgemäßen Vorratsvorrichtungen lagerbar sind. Eine entsprechende Kommissioniervorrichtung ist beispielsweise in der EP 3 141 497 A1 offenbart, deren Offenbarungsgehalt in Bezug auf die Kommissioniervorrichtung hiermit in diese Anmeldung übernommen wird. Die Kommissioniervorrichtung 200 umfasst eine Mehrzahl von horizontalen Lagerplätzen 201, auf welchen unter anderem erfindungsgemäße Vorratsvorrichtungen gelagert werden können. Die Kommissioniervorrichtung umfasst ferner eine Einlagerungseinrichtung 220, die üblicherweise als Einlagerungsband ausgeführt ist. Die Einlagerungseinrichtung 220 umfasst einen Ablagebereich 221, der sich nach außen erstreckt und welcher zur Aufnahme von einzulagerndem Stückgut dient. Die Kommissioniervorrichtung umfasst ferner einen Greifer 210, mit welchem Stückgüter von der Einlagerungseinrichtung 220 entnommen und einem horizontalen Lagerplatz zugeführt werden können. Der Greifer ist bei der gezeigten Ausführungsform als Backengreifer ausgeführt, welcher über einen Ablagetisch 211 und zwei Klemmbacken 212a, 212b verfügt. Die Klemmbacken 212a, 212b sind an einer Klemmbackenführung 213 befestigt, mittels welcher die Klemmbacken horizontal über den Ablagetisch 211 bewegt werden können. Ferner dient die Klemmbackenführung 213 dazu, die Klemmbacken zu schwenken, um Stückgüter zu greifen, wie dies in Figur 11 angedeutet ist. Auf eine weitere detaillierte Beschreibung der Kommissioniervorrichtung wird hier verzichtet, es wird auf die oben genannte Veröffentlichung verwiesen.

Zur Durchführung des erfindungsgemäßen Verfahrens wird zunächst eine einzulagernde Vorratsstation bereitgestellt, wobei diese die vorgenannten baulichen Gegebenheiten aufweist. Um die Lagerfähigkeit dieser Vorratsstation herzustellen, ist diese erfindungsgemäß mit einem Adaptermittel entsprechend den oben beschriebenen Merkmalen zu verbinden, wodurch eine lagerfähige greifbare Vorratsvorrichtung erzeugt wird. Diese greifbare Vorratsvorrichtung 1(10) wird in dem Ablagebereich 221 der Einlagerungseinrichtung 220 angeordnet und mit der Einlagerungseinrichtung in einer Einlagerungsrichtung in den Lagerbereich der Kommissioniervorrichtung bewegt (in der Figur sind stets zwei hintereinander angeordnete Vorratsvorrichtungen gezeigt, um Figur 11 an nachfolgende Figuren anzugleichen). Bezogen auf die Figur 11 bedeutet dies, dass die greifbaren Vorratsvorrichtungen 1(10) nach rechts bewegt werden. Anschließend werden die greifbaren Vorratsvorrichtungen, in Figur 11 dann mit 1(11) bezeichnet, mit dem Greifer ergriffen und auf einen horizontalen Lagerplatz 201 bewegt (siehe dazu Vorratsvorrichtungen 1(12)). Durch das Verbinden der Vorratsstation mit dem Adaptermittel, welches auf genau diese einzulagernde Vorratsstation abgestellt ist, wird aus der eigentlich nicht lagerfähigen Vorratsstation eine lagerfähige (weil greifbare) Vorratsvorrichtung, welche mit einer üblichen Kommissioniervorrichtung gehandhabt werden kann.

Unter Bezugnahme auf die Figuren 9A - 10B wurde angedeutet, dass beim hintereinander Anordnen von zwei Vorratsstation (oder zwei erfindungsgemäßen Vorratsvorrichtungen mit Adaptermitteln ohne Konturausgleichsabschnitt) eine Lücke im unteren Bereich entsteht, die beim gleichzeitigen Bewegen dieser hintereinander angeordneten Stückgüter zu Problemen führen kann. Unter Bezugnahme auf die Figuren 12A - 13B ist dies veranschaulicht. In den Figuren 12A, 12B ist eine Verfahrensansicht gezeigt, bei welcher auf einer Einlagerungseinrichtung 220 zwei erfindungsgemäße Vorratsvorrichtungen 1(1), 1(2) angeordnet sind, die mit Klemmbacken eines Klemmgreifers von der Einlagerungseinrichtung 220 bewegt werden sollen. Bei der in den Figuren 12A, 12B gezeigten dritten Ausführungsform der erfindungsgemäßen Vorratsvorrichtung umfasst das Adaptermittel 100 aber keinen Konturausgleichsabschnitt, sodass zwischen den Adaptermitteln 100 eine Lücke entsteht, die hier der Einfachheit halber mit Δ100 bezeichnet ist. Aufgrund dieser Lücke zwischen den beiden Adaptermitteln bzw. der Lücke im unteren Bereich der hintereinander angeordneten Vorratsvorrichtungen kann es bei dem Bewegen der beiden Vorratsvorrichtungen von der Einlagerungseinrichtung 220 herunter passieren, dass sich die linke Vorratsvorrichtung 1(1) aufstellt und verkeilt, sodass ein weiteres Bewegen der beiden Vorratsvorrichtungen nicht möglich ist oder gegebenenfalls zu Beschädigungen der Einlagerungseinrichtung führen kann. Das Fehlen des Konturausgleichsabschnitts ist jedoch nur dann relevant, wenn es überhaupt in Erwägung gezogen wird, zwei hintereinander angeordnete Vorratsvorrichtungen gleichzeitig zu bewegen. Ist dies nicht der Fall, ist das Vorsehen des Konturausgleichsabschnitts überflüssig, denn das Greifbarmachen bzw. die Lagerfähigkeit erhält die Vorratsstation nicht durch den Konturausgleichsabschnitt als solchen.

Die Figuren 13A und 13B zeigen schematische seitliche Verfahrensansichten des erfindungsgemäßen Verfahrens bei Verwendung von Adaptermitteln mit Konturausgleichsabschnitt. Da keine Lücke Δ100 vorhanden ist, kann sich die Vorratsvorrichtung 1(1) beim Bewegen nicht aufstellen und es kann keine Beschädigung der Einlagerungseinrichtung oder eine fehlerhafte Bewegung der beiden Vorratseinrichtungen stattfinden.

## Patentansprüche

1. Vorratsvorrichtung (1) zur Lagerung in einer mit einem Backengreifer (210) betriebenen Kommissioniervorrichtung (200) mit einer Mehrzahl von horizontalen Lagerplätzen (201), aufweisend
eine Vorratsstation (5) für Kleinstückgüter mit
einem Gehäuse (10) mit einem oberen Gehäuseabschnitt (11), einem unteren Gehäuseabschnitt (12) und einer Bodenplatte (18) mit einer Abgabeöffnung (19), wobei der obere und der untere Gehäuseabschnitt (11, 12) einen Aufnahmeraum (20) mit einem unteren, innen kreiszylinderförmigen Aufnahmeraumabschnitt (21) und einem sich darüber erstreckenden oberen Aufnahmeraumabschnitt (22) definieren, und mit einer in dem unteren kreiszylinderförmigen Aufnahmeraumabschnitt (21) angeordnete Vereinzelungseinrichtung (30) sowie einer Halteeinrichtung (40), wobei das Gehäuse (10) eine äußere maximale Gehäusekontur (15) aufweist, und mit
einer unterhalb des Gehäuses (10) angeordneten und das Gehäuse tragenden Grundstruktur (50) mit jeweils zwei gegenüberliegenden Seitenbereichen (51a, 51b) und zwei gegenüberliegenden Stirnbereichen (52a, 52b), wobei die Seitenbereiche (51a, 51b) und die Stirnbereiche (52a, 52b) gemeinsam eine Grundstrukturkontur (55) definieren; sowie
ein Adaptermittel (100) mit zumindest zwei Kontaktmitteln (110a, 110b), die lösbar an der Grundstruktur (50) angeordnet sind und die derart ausgestaltet sind,
dass jedes Kontaktmittel (110a, 110b) im befestigten Zustand benachbart zu den Seitenbereichen (51a, 51b) einen Kontaktabschnitt (111a, 111b) bereitstellt, wobei die Kontaktabschnitte (111a, 111b) derart ausgebildet und ausgerichtet sind, dass die Kontaktabschnitte (111a, 111b) von Klemmbacken des Backengreifers greifbar sind.

2. Vorratsvorrichtung (1) nach Anspruch 1, **dadurch gekennzeichnet, dass** das Adaptermittel (100) U-förmig ausgebildet ist und einen Basisabschnitt (101) aufweist, an dem die Kontaktmittel (110a, 110b) befestigt sind.

3. Vorratsvorrichtung (1) nach Anspruch 2, **dadurch gekennzeichnet, dass** zumindest ein Kontaktmittel (110a, 110b) einen elastischen Klemmabschnitt (112a, 112b) aufweist und die Kontaktmittel (110a, 110b) und der zumindest eine Klemmabschnitt (112a, 112b) derart angeordnet und ausgebildet sind, dass das Adaptermittel (100) mittels eines Kraftschlusses an der Grundstruktur (50) lösbar befestigt ist.

4. Vorratsvorrichtung (1) nach Anspruch 2, **dadurch gekennzeichnet, dass** zumindest ein Kontaktmittel (110a, 110b) bei seinem von dem Basisabschnitt (101) abgewandten Endabschnitt (113a, 113b) einen nach innen weisenden, zumindest abschnittsweise elastischen Greifabschnitt (114a, 114b) aufweist, der derart ausgebildet ist, dass das Adaptermittel (100) über den Basisabschnitt (101) und den Greifabschnitt (114a, 114b) mittels einer Klemmkraft lösbar an der Grundstruktur (50) befestigt ist.

5. Vorratsvorrichtung (1) nach Anspruch 1, **dadurch gekennzeichnet, dass** jedes Kontaktmittel (110a, 110b) ein erstes Befestigungsmittel (115a, 115b) und jeder Seitenbereich (51a, 51b) ein zweites Befestigungsmittel (53a, 53b) aufweist, wobei die ersten Befestigungsmittel (115a, 115b) und die zweiten Befestigungsmittel (53a, 53b) derart aufeinander abgestimmt sind, dass die Kontaktmittel (110a, 110b) lösbar an der Grundstruktur (50) befestigt sind.

6. Vorratsvorrichtung (1) nach einem der vorhergehenden Ansprüche, **dadurch gekennzeichnet, dass** das Adaptermittel (100) einen Konturausgleichsabschnitt (120) aufweist, der im befestigten Zustand bei einem Stirnbereich (52a, 52b) der Grundstruktur (50) angeordnet ist und der derart ausgebildet ist, dass eine Adaptermittelkontur (125) im Bereich der Stirnbereiche (52a, 52b) der Grundstruktur (50) vertikal an die maximale Gehäusekontur (15) angepasst ist.

7. Ein Kit zum lagerfähig-machen einer Vorratsstation für Kleinstückgüter in einer mit einem Backengreifer (210) betriebenen Kommissioniervorrichtung (200), umfassend
eine Vorratsstation (5) für Kleinstückgüter mit
einem Gehäuse (10) mit einem oberen Gehäuseabschnitt (11), einem unteren Gehäuseabschnitt (12) und einer Bodenplatte (18) mit einer Abgabeöffnung (19), wobei der obere und der untere Gehäuseabschnitt (11, 12) einen Aufnahmeraum (20) mit einem unteren, innen kreiszylinderförmigen Aufnahmeraumabschnitt (21) und einem sich darüber erstreckenden oberen Aufnahmeraumabschnitt (22) definieren, und mit einer in dem unteren kreiszylinderförmigen Aufnahmeraumabschnitt (21) angeordnete Vereinzelungseinrichtung (30) sowie einer Halteeinrichtung (40), wobei das Gehäuse (10) eine äußere maximale Gehäusekontur (15) aufweist, und mit
einer unterhalb des Gehäuses (10) angeordneten und das Gehäuse tragenden Grundstruktur (50) mit jeweils zwei gegenüberliegenden Seitenbereichen (51a, 51b) und zwei gegenüberliegenden Stirnbereichen (52a, 52b), wobei die Seitenbereiche (51a, 51b) und die Stirnbereiche (52a, 52b) gemeinsam eine Grundstrukturkontur (55) definieren; sowie
ein Adaptermittel (100) zum lösbaren Befestigen an der Grundstruktur (50) der Vorratsstation (5), wobei das Adaptermittel (100) zwei Kontaktmittel (110a, 110b) mit jeweils einem Kontaktabschnitt (111a, 111b) umfasst;
wobei die Kontaktmittel (110a, 110b) derart ausgestaltet sind, dass jedes Kontaktmittel (110a, 110b) im befestigten Zustand benachbart zu den Seitenbereichen (51a, 51b) angeordnet ist, wobei die Kontaktabschnitte (111a, 111b) derart ausgebildet sind, dass die Kontaktabschnitte (111a, 111b) im befestigten Zustand des Adaptermittels (100) von Klemmbacken eines Backengreifers greifbar sind.

8. Ein Kit zum lagerfähig-machen einer Vorratsstation für Kleinstückgüter nach Anspruch 7, **dadurch gekennzeichnet, dass** das Adaptermittel (100) U-förmig ausgebildet ist und einen Basisabschnitt (101) aufweist, an dem die Kontaktmittel (110a, 110b) befestigt sind.

9. Ein Kit zum lagerfähig-machen einer Vorratsstation für Kleinstückgüter nach Anspruch 8, **dadurch gekennzeichnet, dass** zumindest ein Kontaktmittel (110a, 110b) einen elastischen Klemmabschnitt (112a, 112b) aufweist und die Kontaktmittel (110a, 110b) und der zumindest eine Klemmabschnitt (112a, 112b) derart angeordnet und ausgebildet sind, dass das Adaptermittel (100) mittels eines Kraftschlusses an der Grundstruktur (50) lösbar befestigbar ist.

10. Ein Kit zum lagerfähig-machen einer Vorratsstation für Kleinstückgüter nach Anspruch 8, **dadurch gekennzeichnet, dass** zumindest ein Kontaktmittel (110a, 110b) bei seinem von dem Basisabschnitt (101) abgewandten Endabschnitt (113a, 113b) einen nach innen weisenden, zumindest abschnittsweise elastischen Greifabschnitt (114a, 114b) aufweist, der derart ausgebildet ist, dass das Adaptermittel (100) über den Basisabschnitt (101) und den Greifabschnitt (114a, 114b) mittels einer Klemmkraft lösbar an der Grundstruktur (50) befestigbar ist.

11. Ein Kit zum lagerfähig-machen einer Vorratsstation für Kleinstückgüter nach Anspruch 7, **dadurch gekennzeichnet, dass** jedes Kontaktmittel (110a, 110b) ein erstes Befestigungsmittel (115a, 115b) und jeder Seitenbereich (51a, 51b) ein zweites Befestigungsmittel (53a, 53b) aufweist, wobei die ersten Befestigungsmittel (115a, 115b) und die zweiten Befestigungsmittel (53a, 53b) derart aufeinander abgestimmt sind, dass die Kontaktmittel (110a, 110b) lösbar an der Grundstruktur (50) befestigbar sind.

12. Ein Kit zum lagerfähig-machen einer Vorratsstation für Kleinstückgüter nach einem der vorhergehenden Ansprüche, **dadurch gekennzeichnet, dass** das Adaptermittel (100) einen Konturausgleichsabschnitt (120) aufweist, der bei einem Stirnbereich (52a, 52b) der Grundstruktur (50) anordenbar ist und der derart ausgebildet ist, dass eine Adaptermittelkontur (125) im befestigten Zustand im Bereich der Stirnbereiche (52a, 52b) der Grundstruktur (50) vertikal an die maximale Gehäusekontur (15) angepasst ist.

13. Verfahren zum Einlagern von Vorratsstationen in eine Kommissioniervorrichtung (200) mit einer Mehrzahl von horizontalen Lagerplätzen (201), einer Einlagerungseinrichtung (220) sowie einem Backengreifer (210), wobei
eine einzulagernde Vorratsstation (5) mit einem Gehäuse (10) mit einer äußeren maximalen Gehäusekontur (15) und mit einer unterhalb des Gehäuses (10) angeordneten und das Gehäuse tragenden Grundstruktur (50) mit jeweils zwei gegenüberliegenden Seitenbereichen (51a, 51b) und zwei gegenüberliegenden Stirnbereichen (52a, 52b), wobei die Seitenbereiche (51a, 51b) und die Stirnbereiche (52a, 52b) gemeinsam eine Grundstrukturkontur (55) definieren, bereitgestellt wird;
ein Adaptermittel (100) mit zumindest zwei Kontaktmitteln (110a, 110b) bestimmt und bereitgestellt wird, wobei jedes Kontaktmittel (110a, 110b) einen Kontaktabschnitt (111a, 111b) umfasst, wobei das Adaptermittel derart bestimmt wird, dass die Kontaktmittel derart ausgebildet sind, dass das festgelegte Adaptermittel (100) über die Kontaktmittel an der Grundstruktur (50) der einzulagernden Vorratsstationen lösbar befestigbar ist und die Kontaktabschnitte (111a, 111b) von Klemmbacken eines Backengreifers greifbar sind;
das Adaptermittel (100) an der Grundstruktur (50) der einzulagernden Vorratsstationen (5) lösbar befestigt wird und so eine mit dem Backengreifer (210) greifbare Vorratsvorrichtung (1) bereitgestellt wird;
die greifbare Vorratsvorrichtung (1) in einem Ablagebereich (221) der Einlagerungseinrichtung (220) angeordnet wird;
die im Ablagebereich (221) angeordnete greifbare Vorratsvorrichtung (1) mit der Einlagerungseinrichtung (220) in einer Einlagerungsrichtung bewegt wird, und
die greifbare Vorratsvorrichtung (1) mit dem Backengreifer bei den Kontaktabschnitten (111a, 111b) gegriffen und auf einen horizontalen Lagerplatz bewegt wird.

## Claims

1. Storage device (1) for storage in a picking device (200) with a plurality of horizontal storage locations (201), operated with a jaw gripper (210), having
a storage station (5) for small piece goods with
a housing (10) with an upper housing portion (11), a lower housing portion (12), and a base plate (18) with a discharge opening (19), wherein the upper and lower housing portions (11, 12) define a receiving space (20) with a lower, inner circular-cylindrical receiving space portion (21) and an upper receiving space portion (22) extending above it, and with a separating device (30), arranged in the lower circular-cylindrical receiving space portion (21), and a holding device (40), wherein the housing (10) has an outer maximum housing contour (15), and with
a base structure (50) arranged below the housing (10) and supporting the housing, with two opposite side regions (51a, 51b) and two opposite end regions (52a, 52b) in each case, wherein the side regions (51a, 51b) and the end regions (52a, 52b) together define a base structure contour (55); and
an adapter means (100) with at least two contact means (110a, 110b) which are detachably arranged on the base structure (50) and which are designed such that
each contact means (110a, 110b) in the fastened state provides a contact portion (111a, 111b) adjacent to the side regions (51a, 51b), wherein the contact portions (111a, 111b) are designed and aligned such that the contact portions (111a, 111b) can be gripped by clamping jaws of the jaw gripper.

2. Storage device (1) according to claim 1, **characterized in that** the adapter means (100) is U-shaped and has a base portion (101) to which the contact means (110a, 110b) are fastened.

3. Storage device (1) according to claim 2, **characterized in that** at least one contact means (110a, 110b) has an elastic clamping portion (112a, 112b), and the contact means (110a, 110b) and the at least one clamping portion (112a, 112b) are arranged and designed such that the adapter means (100) is detachably fastened to the base structure (50) by means of a frictional connection.

4. Storage device (1) according to claim 2, **characterized in that** at least one contact means (110a, 110b) has, at its end portion (113a, 113b) facing away from the base portion (101), an inward-facing, at least partially elastic gripping portion (114a, 114b) which is designed such that the adapter means (100) is detachably fastened to the base structure (50) via the base portion (101) and the gripping portion (114a, 114b) by means of a clamping force.

5. Storage device (1) according to claim 1, **characterized in that** each contact means (110a, 110b) has a first fastening means (115a, 115b) and each side region (51a, 51b) has a second fastening means (53a, 53b), wherein the first fastening means (115a, 115b) and the second fastening means (53a, 53b) are coordinated with one another in such a way that the contact means (110a, 110b) are detachably fastened to the base structure (50).

6. Storage device (1) according to one of the preceding claims, **characterized in that** the adapter means (100) has a contour compensation portion (120) which, in the fastened state, is arranged at an end region (52a, 52b) of the base structure (50) and which is designed such that an adapter means contour (125) in the region of the end regions (52a, 52b) of the base structure (50) is vertically adapted to the maximum housing contour (15).

7. A kit for making a storage station for small piece goods storable in a picking device (200) operated with a jaw gripper (210), comprising
a storage station (5) for small piece goods with
a housing (10) with an upper housing portion (11), a lower housing portion (12), and a base plate (18) with a discharge opening (19), wherein the upper and lower housing portions (11, 12) define a receiving space (20) with a lower, inner circular-cylindrical receiving space portion (21) and an upper receiving space portion (22) extending above it, and with a separating device (30), arranged in the lower circular-cylindrical receiving space portion (21), and a holding device (40), wherein the housing (10) has an outer maximum housing contour (15), and with
a base structure (50) arranged below the housing (10) and supporting the housing, with two opposite side regions (51a, 51b) and two opposite end regions (52a, 52b) in each case, wherein the side regions (51a, 51b) and the end regions (52a, 52b) together define a base structure contour (55); and
an adapter means (100) for releasably fastening to the base structure (50) of the storage station (5), wherein the adapter means (100) comprises two contact means (110a, 110b) each having a contact portion (111a, 111b);
wherein the contact means (110a, 110b) are designed such that each contact means (110a, 110b) is arranged adjacent to the side regions (51a, 51b) in the fastened state, wherein the contact portions (111a, 111b) are designed such that the contact portions (111a, 111b) can be gripped by clamping jaws of a jaw gripper in the fastened state of the adapter means (100).

8. A kit for making a storage station for small piece goods storable according to claim 7, **characterized in that** the adapter means (100) is U-shaped and has a base portion (101) to which the contact means (110a, 110b) are fastened.

9. A kit for making a storage station for small piece goods storable according to claim 8, **characterized in that** at least one contact means (110a, 110b) has an elastic clamping portion (112a, 112b), and the contact means (110a, 110b) and the at least one clamping portion (112a, 112b) are arranged and designed such that the adapter means (100) can be detachably fastened to the base structure (50) by means of a frictional connection.

10. A kit for making a storage station for small piece goods storable according to claim 8, **characterized in that** at least one contact means (110a, 110b) has, at its end portion (113a, 113b) facing away from the base portion (101), an inward-facing, at least partially elastic gripping portion (114a, 114b) which is designed such that the adapter means (100) can be detachably fastened to the base structure (50) via the base portion (101) and the gripping portion (114a, 114b) by means of a clamping force.

11. A kit for making a storage station for small piece goods storable according to claim 7, **characterized in that** each contact means (110a, 110b) has a first fastening means (115a, 115b) and each side region (51a, 51b) has a second fastening means (53a, 53b), wherein the first fastening means (115a, 115b) and the second fastening means (53a, 53b) are coordinated with one another in such a way that the contact means (110a, 110b) can be detachably fastened to the base structure (50).

12. A kit for making a storage station for small piece goods storable according to one of the preceding claims, **characterized in that** the adapter means (100) has a contour compensation portion (120) which can be arranged at an end region (52a, 52b) of the base structure (50) and which is designed such that an adapter means contour (125) in the fastened state in the region of the end regions (52a, 52b) of the base structure (50) is adapted vertically to the maximum housing contour (15).

13. Method for storing storage stations in a picking device (200) with a plurality of horizontal storage locations (201), a storing device (220), and a jaw gripper (210), wherein
a storage station (5) to be stored is provided, having a housing (10) with an outer maximum housing contour (15) and with a base structure (50), arranged below the housing (10) and supporting the housing, with two opposite side regions (51a, 51b) and two opposite end regions (52a, 52b) in each case, wherein the side regions (51a, 51b) and the end regions (52a, 52b) together define a base structure contour (55);
an adapter means (100) with at least two contact means (110a, 110b) is determined and provided, wherein each contact means (110a, 110b) comprises a contact portion (111a, 111b), wherein the adapter means is determined such that the contact means are designed such that the designated adapter means (100) can be detachably fastened via the contact means to the base structure (50) of the storage stations to be stored, and the contact portions (111a, 111b) can be gripped by clamping jaws of a jaw gripper;
the adapter means (100) is detachably fastened to the base structure (50) of the storage stations (5) to be stored, thus providing a storage device (1) that can be gripped with the jaw gripper (210);
the grippable storage device (1) is arranged in a deposit region (221) of the storing device (220);
the grippable storage device (1) arranged in the deposit region (221) is moved with the storing device (220) in a storage direction, and
the grippable storage device (1) is gripped with the jaw gripper at the contact portions (111a, 111b) and moved to a horizontal storage location.

## Revendications

1. Dispositif de stockage (1) destiné à être utilisé dans un dispositif de préparation de commandes (200) actionné par une pince à mâchoires (210) et comportant une pluralité d'emplacements de stockage horizontaux (201), comprenant
une station de stockage (5) pour des marchandises de petite taille, avec
un boîtier (10) avec une partie supérieure de boîtier (11), une partie inférieure de boîtier (12) et une plaque de fond (18) avec une ouverture de distribution (19), les parties supérieure et inférieure du boîtier (11, 12) définissant un espace de réception (20) avec une partie inférieure de l'espace de réception (21) de forme cylindrique circulaire à l'intérieur et une partie supérieure de l'espace de réception (22) s'étendant au-dessus, et avec un dispositif de séparation (30) disposé dans la partie inférieure de l'espace de réception (21) de forme cylindrique circulaire ainsi qu'un dispositif de maintien (40), le boîtier (10) présentant un contour extérieur maximal de boîtier (15), et avec
une structure de base (50) disposée sous le boîtier (10) et supportant le boîtier, avec respectivement deux zones latérales opposées (51a, 51b) et deux zones frontales opposées (52a, 52b), les zones latérales (51a, 51b) et les zones frontales (52a, 52b) définissant ensemble un contour de structure de base (55) ; ainsi qu' un moyen d'adaptation (100) avec au moins deux moyens de contact (110a, 110b) qui sont disposés de manière amovible sur la structure de base (50) et qui sont conçus de telle sorte
que chaque moyen de contact (110a, 110b) fournit, à l'état fixé, une section de contact (111a, 111b) adjacente aux zones latérales (51a, 51b), les sections de contact (111a, 111b) étant conçues et alignées de telle sorte que les sections de contact (111a, 111b) puissent être saisies par les mâchoires de serrage de la pince à mâchoires.

2. Dispositif de stockage (1) selon la revendication 1, **caractérisé en ce que** le moyen d'adaptation (100) est conçu en forme de U et présente une partie de base (101) sur laquelle sont fixés les moyens de contact (110a, 110b).

3. Dispositif de stockage (1) selon la revendication 2, **caractérisé en ce qu'**au moins un moyen de contact (110a, 110b) comporte une partie de serrage élastique (112a, 112b) et **en ce que** les moyens de contact (110a, 110b) et l'au moins une partie de serrage (112a, 112b) sont disposés et conçus de telle sorte que le moyen d'adaptation (100) est fixé de manière amovible à la structure de base (50) au moyen d'une liaison par adhérence.

4. Dispositif de stockage (1) selon la revendication 2, **caractérisé en ce qu'**au moins un moyen de contact (110a, 110b) présente, au niveau de sa section d'extrémité (113a, 113b) opposée à la partie de base (101), une partie de préhension (114a, 114b) orientée vers l'intérieur et au moins partiellement élastique, qui est conçue de telle sorte que le moyen d'adaptation (100) est fixé de manière amovible à la structure de base (50) par l'intermédiaire de la partie de base (101) et de la partie de préhension (114a, 114b) au moyen d'une force de serrage.

5. Dispositif de stockage (1) selon la revendication 1, **caractérisé en ce que** chaque moyen de contact (110a, 110b) comporte un premier moyen de fixation (115a, 115b) et chaque zone latérale (51a, 51b) comporte un deuxième moyen de fixation (53a, 53b), les premiers moyens de fixation (115a, 115b) et les deuxièmes moyens de fixation (53a, 53b) étant adaptés les uns aux autres de telle sorte que les moyens de contact (110a, 110b) sont fixés de manière amovible à la structure de base (50).

6. Dispositif de stockage (1) selon l'une des revendications précédentes, **caractérisé en ce que** le moyen d'adaptation (100) comporte une section de compensation de contour (120) qui, à l'état fixé, est disposée au niveau d'une zone frontale (52a, 52b) de la structure de base (50) et qui est conçue de telle sorte qu'un contour de moyen d'adaptation (125) dans la zone des zones frontales (52a, 52b) de la structure de base (50) est adapté verticalement au contour maximal de boîtier (15).

7. Kit permettant de rendre stockable une station de stockage pour marchandises de petite taille dans un dispositif de préparation de commandes (200) actionné par une pince à mâchoires (210), comprenant
une station de stockage (5) pour marchandises de petite taille avec
un boîtier (10) avec une partie supérieure de boîtier (11), une partie inférieure de boîtier (12) et une plaque de fond (18) avec une ouverture de distribution (19), les parties supérieure et inférieure du boîtier (11, 12) définissant un espace de réception (20) avec une partie inférieure de l'espace de réception (21) de forme cylindrique circulaire à l'intérieur et une partie supérieure de l'espace de réception (22) s'étendant au-dessus, et avec un dispositif de séparation (30) disposé dans la partie inférieure de l'espace de réception (21) de forme cylindrique circulaire ainsi qu'un dispositif de maintien (40), le boîtier (10) présentant un contour extérieur maximal de boîtier (15), et avec
une structure de base (50) disposée sous le boîtier (10) et supportant le boîtier, avec respectivement deux zones latérales opposées (51a, 51b) et deux zones frontales opposées (52a, 52b), les zones latérales (51a, 51b) et les zones frontales (52a, 52b) définissant ensemble un contour de structure de base (55) ; ainsi qu'
un moyen d'adaptation (100) pour la fixation amovible à la structure de base (50) de la station de stockage (5), le moyen d'adaptation (100) comprenant deux moyens de contact (110a, 110b) avec respectivement une section de contact (111a, 111b) ;
les moyens de contact (110a, 110b) étant conçus de telle sorte que chaque moyen de contact (110a, 110b), à l'état fixé, est disposé à proximité des zones latérales (51a, 51b), les sections de contact (111a, 111b) étant conçues de telle sorte que les sections de contact (111a, 111b) peuvent être saisies par les mâchoires de serrage d'une pince à mâchoires lorsque le moyen d'adaptation (100) est à l'état fixé.

8. Kit permettant de rendre stockable une station de stockage pour marchandises de petite taille selon la revendication 7, **caractérisé en ce que** le moyen d'adaptation (100) est conçu en forme de U et présente une partie de base (101) sur laquelle sont fixés les moyens de contact (110a, 110b).

9. Kit permettant de rendre stockable une station de stockage pour marchandises de petite taille selon la revendication 8, **caractérisé en ce qu'**au moins un moyen de contact (110a, 110b) comporte une partie de serrage élastique (112a, 112b) et **en ce que** les moyens de contact (110a, 110b) et l'au moins une partie de serrage (112a, 112b) sont disposés et conçus de telle sorte que le moyen d'adaptation (100) peut être fixé de manière amovible à la structure de base (50) au moyen d'une liaison par adhérence.

10. Kit permettant de rendre stockable une station de stockage pour marchandises de petite taille selon la revendication 8, **caractérisé en ce qu'**au moins un moyen de contact (110a, 110b) présente, au niveau de sa section d'extrémité (113a, 113b) opposée à la partie de base (101), une partie de préhension (114a, 114b) orientée vers l'intérieur et au moins partiellement élastique, qui est conçue de telle sorte que le moyen d'adaptation (100) peut être fixé de manière amovible à la structure de base (50) par l'intermédiaire de la partie de base (101) et de la partie de préhension (114a, 114b) au moyen d'une force de serrage.

11. Kit permettant de rendre stockable une station de stockage pour marchandises de petite taille selon la revendication 7, **caractérisé en ce que** chaque moyen de contact (110a, 110b) comporte un premier moyen de fixation (115a, 115b) et chaque zone latérale (51a, 51b) comporte un deuxième moyen de fixation (53a, 53b), les premiers moyens de fixation (115a, 115b) et les deuxièmes moyens de fixation (53a, 53b) étant adaptés les uns aux autres de telle sorte que les moyens de contact (110a, 110b) puissent être fixés de manière amovible à la structure de base (50).

12. Kit permettant de rendre stockable une station de stockage pour marchandises de petite taille selon l'une des revendications précédentes, **caractérisé en ce que** le moyen d'adaptation (100) comporte une section de compensation de contour (120) qui peut être disposée au niveau d'une zone frontale (52a, 52b) de la structure de base (50) et qui est conçue de telle sorte qu'un contour de moyen d'adaptation (125) est adapté verticalement au contour maximal de boîtier (15) à l'état fixé dans la zone des zones frontales (52a, 52b) de la structure de base (50).

13. Procédé pour stocker des stations de stockage dans un dispositif de préparation de commandes (200) comprenant une pluralité d'emplacements de stockage horizontaux (201), un dispositif d'entreposage (220) et une pince à mâchoires (210), dans lequel
une station de stockage (5) à stocker, comportant un boîtier (10) avec un contour de boîtier maximal extérieur (15) et une structure de base (50) disposée en dessous du boîtier (10) et supportant le boîtier, avec respectivement deux zones latérales opposées (51a, 51b) et deux zones frontales opposées (52a, 52b), les zones latérales (51a, 51b) et les zones frontales (52a, 52b) définissant ensemble un contour de structure de base (55), est fournie ;
un moyen d'adaptation (100) avec au moins deux moyens de contact (110a, 110b) est défini et fourni, chaque moyen de contact (110a, 110b) comprenant une section de contact (111a, 111b), le moyen d'adaptation étant défini de telle sorte que les moyens de contact sont conçus de telle sorte que le moyen d'adaptation défini (100) puisse être fixé de manière amovible à la structure de base (50) des stations de stockage à stocker par l'intermédiaire des moyens de contact et que les sections de contact (111a, 111b) puissent être saisies par les mâchoires de serrage d'une pince à mâchoires ;
le moyen d'adaptation (100) est fixé de manière amovible à la structure de base (50) des stations de stockage (5) à stocker, fournissant ainsi un dispositif de stockage (1) pouvant être saisi par la pince à mâchoires (210) ;
le dispositif de stockage saisissable (1) est disposé dans une zone de dépôt (221) du dispositif d'entreposage (220) ;
le dispositif de stockage saisissable (1) disposé dans la zone de dépôt (221) est déplacé avec le dispositif d'entreposage (220) dans une direction d'entreposage, et
le dispositif de stockage saisissable (1) est saisi avec la pince à mâchoires au niveau des sections de contact (111a, 111b) et déplacé vers un emplacement de stockage horizontal.
